# EUROPÄISCHE PATENTANMELDUNG

(11) **EP 4 000 423 A1**
(43) Veröffentlichungstag der Anmeldung: **25.05.2022**
(21) Anmeldenummer: 21208307.5
(22) Anmeldetag: 15.11.2021
(51) Int. Cl.: A23L 33/185, A23C 11/10, A23L 11/60, A23L 29/212, A23L 11/50

(54) **PFLANZLICHES MILCHPRODUKT MIT ERBSEN SOWIE VERFAHREN ZUR HERSTELLUNG EINES PFLANZLICHEN MILCHPRODUKTES**

(30) Priorität: 13.11.2020 DE 102020006973; 24.03.2021 DE 102021001525
(71) Anmelder: VF Nutrition GmbH, 10249 Berlin (DE)
(72) Erfinder: Pluschke, Anton, 13353 Berlin (DE); Braunwarth, Moritz, 10119 Berlin (DE); Hartmann, Nicolas, 10999 Berlin (DE); Katter, Niklas, 10405 Berlin (DE)
(74) Vertreter: Castell, Klaus

(57) **Zusammenfassung**

Ein Erbsen enthaltendes pflanzliches Milchprodukt enthält hydrolysierten Sirup als hydrolysierten Reissirup oder hydrolysierten Erbsensirup oder hydrolysierten Hafersirup oder hydrolysierten Dinkelsirup oder hydrolysierten Ackerbohnensirup.

## Beschreibung

Die Erfindung betrifft ein pflanzliches Milchprodukt mit Erbsen. Die Erbsen können dabei als Erbsenmehl, Erbsenkonzentrat oder Erbsenisolat in das Produkt eingebracht werden.

Alternative Milchprodukte auf pflanzlicher Basis (PBM) basieren auf verschiedenen Getreidesorten, Nüssen und Hülsenfrüchten. Von diesen PBMs ist Sojamilch am meisten auf dem Markt etabliert. In den letzten Jahren sind jedoch Hafermilch und andere PBMs zu einer immer beliebteren Verbraucherwahl geworden. Marktforschungen deuten darauf hin, dass dies auf Bedenken hinsichtlich Nachhaltigkeit und Allergenen bei Sojamilch zurückzuführen ist. Trotz der steigenden Popularität anderer PBMs haben Untersuchungen gezeigt, dass viele PBMs, darunter Mandel, Cashew, Kokosnuss, Haselnuss, Hanf, Macadamia, Hafer, Quinoa und Reis, einen niedrigen oder keinen Proteingehalt (< 0,5 %) aufweisen (Jeske et al., 2017). Nur Sojamilch entspricht nachweislich dem Wert von Kuhmilch (3,7 %). Die Übereinstimmung des Sojaproteins mit dem in Kuhmilch gefundenen Wert war nicht unproblematisch. Beschreibende sensorische Ergebnisse haben gezeigt, dass Sojamilch einen starken Beanie- und Grasgeschmack hat (Torres-Penaranda & Reitmeier 2001), der für die Verbraucher nicht ansprechend ist. Daher bleibt die Einbeziehung von Konzentrationen an Pflanzenproteinen, die denen in Kuhmilch entsprechen, eine Herausforderung.

VF Nutrition GmbH hat die weltweit erste Milch auf Pflanzenbasis entwickelt, die 50 % mehr Protein als Kuhmilch enthält (5,2g/100ml Protein). VF Nutrition GmbH verwendet Erbsenprotein-Isolat in Kombination mit Reissirup und Rapsöl, angereichert mit Vitaminen und Mineralien.

Was die Kohlenhydrate betrifft, so enthält Kuhmilch überwiegend Laktose (4 - 5 %). In Bezug auf die Süße beträgt der Laktosegehalt 0,2 bis 0,4 im Vergleich zu 1,0 bei Saccharose. Zum Vergleich: Die Süße von Glukose beträgt 0,6 bis 0,7, die von Fruktose 1,3 und die von Maltose 0,4 bis 0,5. Um ein ähnliches Süßeprofil wie PBMs zu erzielen, ist Saccharose (Zucker) eine beliebte Wahl. Agavendicksaft, Apfelkonzentrat und Ahornsirup werden in der Industrie auch zum Süßen von PBMs verwendet. Andere Verbindungen werden ebenfalls verwendet, wie z.B. Maltodextrin, aber hier hängt das Süßeprofil vom Polymerisationsgrad des Polysaccharids ab. Einige Unternehmen verwenden natürliche Zucker aus dem Getreide selbst. Z.B. führt Oatly AB den Zucker nicht auf seiner Zutatenliste auf, aber im Nährwertprofil enthält er Kohlenhydrate mit 6,7 g, von denen 4,1 g Zucker sind. Trotz eines so hohen Zuckeranteils im PBM von Oatly AB wird berichtet, dass das PBM von Oatly AB einen mäßigen Glycemix-Index aufweist, was möglicherweise auf das Vorhandensein von Beta-Glucanen (Ballaststoffe) aus dem Hafer zurückzuführen ist (Jeske et al., 2017).

Hydrolysierter Sirup (ähnliche Bezeichnungen sind: *Stärkesirup, Bonbonsirup*), ist eine aus Stärke durch hydrolytische Aufspaltung gewonnene eingedickte Lösung, die je nach Ausgangsprodukt aus unterschiedlichen Zuckern besteht. Die Hydrolyse der Stärke kann enzymatisch oder säurekatalysiert hervorgerufen werden.

Erfindungsgemäß wird ein Milchprodukt vorgeschlagen, das hydrolysierten Sirup als hydrolysierten Reissirup oder hydrolysierten Erbsensirup oder hydrolysierten Hafersirup oder hydrolysierten Dinkelsirup oder hydrolysierten Ackerbohnensirup enthält.

Das Milchprodukt enthält somit hydrolysierte Stärke aus Reis, Erbsen, Hafer, Dinkel und/oder Akerbohnen.

Sofern angegeben ist, dass das Milchprodukt Erbsen enthält, so ist dies dahingehend zu verstehen, dass das Ausgangsprodukt Erbsen enthält, unabhängig davon in welcher Form oder Konzentration auch das Milchprodukt noch Erbsen enthält. Das Milchprodukt enthält noch Bestandteile der Erbsen oder Bestandteile, die aus Erbsen stammen oder durch eine Umwandlung aus Erbsen entstanden sind. wie insbesondere Erbsenproteinisolat.

Die Verwendung von hydrolysiertem Reissirup als Süßungsmittel für ein PBM auf der Basis von Erbsenproteinisolatlösung bringt drei Hauptvorteile:
1) Verbessertes Süßungsprofil. Hydrolysierter Reissirup enthält einen hohen Anteil an Maltose von 67 g Gesamtzucker (bezogen auf die Trockenmasse), von denen 29 g Glukose und 38 g Maltose sind. Aufgrund dieses hohen Maltosegehalts im hydrolysierten Reissirup weist der hydrolysierte Reissirup im Vergleich zu Saccharose ein ähnlicheres Süßungsprofil auf als Lactose. Während Saccharose ein sehr "scharfes" Süßeprofil aufweist, bietet Maltose dagegen ein rundes Süßeprofil. Genauer gesagt ist das Süßeprofil, das hydrolysierter Reissirup mit sich bringt, länger anhaltend, ähnlich wie Laktose. Durch die Verwendung von hydrolysiertem Reissirup werden PBMs sensorisch näher an Kuhmilch herangeführt. Darüber hinaus verleiht der hydrolysierte Reissirup einen leichten Karamellgeschmack, der dazu beiträgt, einen Teil des vom Erbsenproteinisolat stammenden Fehlgeschmacks zu überdecken.
2) Aus ernährungsphysiologischer Sicht hat ein PBM mit hohem Proteingehalt einen besseren glykämischen Index im Vergleich zu PBM wie z.B. Reis, der relativ proteinarm ist(Jesek et al., 2017). Darüber hinaus hat Protein eine insulinotrope Wirkung und fördert so die Sekretion des Peptidhormons Insulin (Rietman, A. et al., 2014), das dazu beiträgt, Glukose rasch aus dem Blutkreislauf zu entfernen. Der höhere Proteingehalt vermindert die Magenentleerung und reduziert somit die postprandiale Aktualisierung der Glukose im Blut. Die Erhöhung des Proteingehalts bringt einen zusätzlichen Nutzen durch die Erhöhung des Ballaststoffgehalts, der bekanntlich auch den glykämischen Index senkt (Englyst et al., 2003).
3) Aspekt des Clean Label. Zucker (Saccharose) ist ein raffinierter Süßstoff, der bei der Formulierung vieler Lebensmittel und Getränke verwendet wird, um sowohl zu süßen als auch Textur, Körper und Volumen hinzuzufügen. Saccharose wurde mit gesundheitlichen Problemen in Verbindung gebracht, wie z.B. dem Beitrag zu Fettleibigkeit und dem Ungleichgewicht des Blutzuckers. Clean Label bedeutet alles, was die Zutatenkennzeichnung verbraucherfreundlicher gestaltet, z.B. weniger Zutaten, weniger chemische Inhaltsstoffe, weniger Zucker usw. Die Verwendung von hydrolysiertem Reissirup, der nicht als Zucker, sondern als Reis gekennzeichnet wird, macht dies für die Verbraucher akzeptabler.

Als ursprünglich einfaches fermentiertes Milchprodukt hat Joghurt viele Variationen. Er kann dünn und flüssig oder dick und fest sein. Er kann aus Kuhmilch, Ziegenmilch, Schafsmilch, Nussmilch, Sojamilch, Reismilch und zahlreichen anderen cremigen Substanzen hergestellt werden. Joghurt ist in den meisten Fällen eine fermentierte Milch. Im Wesentlichen ist Joghurt das Produkt von nützlichen Bakterien, die Milch fermentieren und sie in ein eingedicktes, saures Lebensmittel verwandeln, das länger frisch bleibt als die Milch selbst und Millionen von Bakterien enthält, die für den menschlichen Darm nützlich sind.

Der Prozess der Umwandlung von Milch in Joghurt beinhaltet eine Gärung. Bestimmte Arten von Bakterien wirken auf die in der Milch enthaltene Laktose (Milchzucker) ein und produzieren Milchsäure. Die Milchsäure senkt den pH-Wert der Milch und bewirkt, dass das Milchprotein gerinnt und eine feste Masse bildet.

Die gesäuerte Milch ist eine unwirtliche Umgebung für verderbende Bakterien, so dass der Joghurt länger frisch bleibt als unbehandelte Milch.

Es gibt zwei Arten von Joghurt, mesophilen und thermophilen Joghurt. Mesophil bedeutet, dass er bei Raumtemperatur kultiviert wird. Thermophil bedeutet, dass die Kultur zum Bebrüten einen bestimmten Temperaturbereich benötigt.

Joghurt hat einen Geschmack, der den meisten von uns vertraut ist: säuerlich, weich und cremig.

Kuhmilch enthält Protein hauptsächlich in Form von Kasein. Kaseinmoleküle sind in Gruppen gebunden, die Mizellen genannt werden, und die Mizellen neigen dazu, in frischer Milch voneinander getrennt zu bleiben. In Kulturmilch ändern die Kaseinmicellen ihre chemische Struktur, so dass sie zu Quark verklumpen. Der Teil der Milch, der verklumpt, wird als Milchtrockenmasse bezeichnet und macht etwa 12 % des Kuhmilchgehalts aus.

Etwa 20 % des Proteins in der Milch ist kein Kasein, und wenn sich Quark bildet, verbleiben die anderen Proteine in der flüssigen Molke, sie werden daher als Molkenproteine bezeichnet.

Kuhmilch enthält auch Laktose, eine Zuckerart, die aus Saccharose und Galaktose besteht. Etwa 40 % der Energie (Kalorien) in der Milch stammen aus Laktose.

Der Fettgehalt variiert je nach Art der Kuh, von der die Milch stammt, je nach Jahreszeit und anderen Faktoren. Der Fettgehalt von Rohmilch kann zwischen etwa 3 % und 5 % schwanken. Das Fett bildet sich zu Kügelchen, und jedes Kügelchen ist von einer Membran aus Phospholipiden und Proteinen umgeben. Diese Membran verhindert, dass das Fett wahrnehmbare Klumpen bildet, und verhindert auch, dass das Fett von den Enzymen in der Milch verdaut wird. Die Vitamine A, E, D und K kommen in der Milch vor. Rohmilch enthält auch lebende weiße Blutkörperchen sowie verschiedene Bakterien und Enzyme. Kuhmilch ist leicht sauer mit einem pH-Wert von 6,4 bis 6,8.

Ein sehr häufig verwendetes Bakterium für die Joghurtproduktion ist Lactobacillus acidophilus. Dieses Bakterium baut Laktose ab und produziert als einziges Produkt Milchsäure. L. acidophilus kommt natürlicherweise im menschlichen Verdauungssystem und in anderen Teilen des Körpers vor. Lactococcus lactis verdaut Laktose und produziert Milchsäure, die den pH-Wert der Milch senkt und die Gerinnung des Milchproteins ermöglicht. Sie kann auch zur Fermentierung von Gemüse und Getreide sowie von milchfremden Milchprodukten verwendet werden.

Zur Herstellung einer Basis für einen Joghurt auf pflanzlicher Basis werden üblicherweise Nüsse, Getreide oder Hülsenfrüchte für eine bestimmte Zeit (z.B. 24 Stunden) mit Wasser eingeweicht und gemischt. Das Fruchtfleisch wird normalerweise verworfen, die Brühe erhitzt und dann abgekühlt, dann werden die Bakterienkulturen hinzugefügt. Je nachdem, ob der Joghurt thermophil oder mesophil ist.

Forschungen haben gezeigt, dass viele Milchprodukte auf pflanzlicher Basis, die als Joghurtbasis verwendet werden könnten, darunter Mandel, Cashew, Kokosnuss, Haselnuss, Hanf, Macadamia, Hafer, Quinoa und Reis, einen niedrigen oder keinen Proteingehalt (<0,5%) aufweisen (Jeske et al., 2017). Nur Sojamilch entspricht nachweislich dem Wert von Kuhmilch (3,7%). Aufgrund des Mangels an Protein in den meisten dieser Basen haben sie schlechte Geliereigenschaften (der Prozess, der normalerweise bei der Säuerung des Joghurts durch Stämme wie Lactobacillus acidophilus auftritt).

Joghurts, die aus diesen Pflanzenbasen hergestellt werden, sind daher auf den Zusatz von Stärke und Verdickungsmitteln angewiesen, um ein Produkt herzustellen, das ähnliche Eigenschaften wie Joghurt aus Kuhmilch hat. Die Herstellung eines Clean Label Joghurts auf Pflanzenbasis ist daher mit vielen Herausforderungen verbunden.

Diese folgende Erfindung nutzt die Enzymhydrolyse, um die Stärke (die aus dem Erbsenmehl besteht) in einfache Zucker (Glukose) umzuwandeln. Nach der teilweisen Hydrolyse der Stärke wird Erbsenproteinkonzentrat/Isolat hinzugefügt, um den Proteingehalt auf das gewünschte Niveau zu bringen (ca. 5 % des Gewichts). Diese Mischung kann dann mit den veganen Starterkulturstämmen zur Fermentation beimpft werden. Die veganen Starterkulturen, die für die Fermentation verwendet werden, werden nach ihrer Fähigkeit ausgewählt, erstens Milchsäure zu produzieren (Erhöhung des Säuregrades/pH auf 4,6 innerhalb des gewünschten Zeitrahmens von 6 - 8 Stunden) und zweitens die Fehlgeschmacksstoffe zu reduzieren, um einen neutralen Geschmack im Joghurt zu erzeugen.

Der Erfindung liegt daher die Aufgabe zu Grunde, ein pflanzliches Milchprodukt mit Erbsenproteinisolat weiterzuentwickeln. Diese Aufgabe wird mit einem pflanzlichen Milchprodukt mit Erbsenproteinisolat mit den Merkmalen des Patentanspruchs 1 gelöst. Vorteilhafte Weiterbildungen sind Gegenstand der Unteransprüche. Es geht zunächst um ein milchähnliches Produkt und dann auch um einen Joghurt und weitere Milchprodukte wie Quark, Käse, Buttermilch, Creme fresh, Dickmilch, Kefir, Molke, Speiseeis etc. Die Erfindung betrifft auch ein Verfahren zur Herstellung eines pflanzlichen Milchproduktes, bei dem innerhalb des Produktionsprozess beigefügte Stärke enzymatisch hydrolysiert wird. Die Stärke kann als Mehl, Proteinkonzentrat oder konzentrierte Stärke beigegeben werden und aus den Quellen Erbse, Reis, Ackerbohnen, Dinkel, Kartoffel oder Raps stammen.

Die folgenden Ausführungsbeispiele zeigen unterschiedliche Ausführungsvarianten.

Trinkrezeptur, enthaltend:
a) 2-12 Gew.-% Erbsenprotein-Isolat; und
b) 1-8 Gew.-% hydrolysierter Reissirup
zu den Süßungsalternativen gehören (oder):
c) 1-8 Gew.-% hydrolysierter Erbsensirup
d) 1-8 Gew.-% hydrolysierter Hafersirup
e) 1-8 Gew.-% hydrolysierter Dinkelsirup
f) 1-8 Gew.-%hydrolysierter Ackerbohnensirup

Verfahren zur Herstellung von Getränken:
1. Wasser hinzufügen
2. Die trockenen Zutaten (Erbsenproteinisolat) hinzufügen und scheren
3. Fügen Sie hydrolysierten Reissirup hinzu und scheren Sie die Mischung
4. Rapsöl hinzufügen und scheren
5. Thermische Behandlung (UHT-Behandlung (direkt und indirekt) oder Pasteurisierung)
6. Heterogenität (Homogenisierung (standardisierte kommerzielle Bedingungen - von 50 bar - 250 bar) oder unhomogenisiert)
7. Verpackung

### ZUTATEN:

Wasser, Erbsenprotein (4,1 %), Rapsöl (2,9 %), Reis, Dikaliumphosphat, Kalziumphosphat, Natürliches Aroma

### Milchrezept Version 1

| pro 100 ml | Milchersatzprodukt auf pflanzlicher Basis |
|---|---|
| Wasser | 94,10 % |
| Erbsenprotein | 2,00 % |
| Rapsöl | 2,90 % |
| Reissirup (oder andere) | 1,00 % |
| Insgesamt | 100 % |

### Milchrezept Version 2

| pro 100 ml | Milchersatzprodukt auf pflanzlicher Basis |
|---|---|
| Wasser | 92,88 % |
| Erbsenprotein | 2,00 % |
| Rapsöl | 2,90 % |
| Reissirup (oder andere) | 1,00 % |
| natürliches Aroma | 0,22 % |
| Dikaliumphosphat | 0,60 % |
| Kalziumphosphat | 0,40 % |
| Insgesamt | 100 % |

### Milchrezept Version 3

| pro 100 ml | Milchersatzprodukt auf pflanzlicher Basis |
|---|---|
| Wasser | 88,45 % |
| Erbsenprotein | 4,13 % |
| Rapsöl | 2,90 % |
| Reissirup (oder andere) | 3,30 % |
| natürliches Aroma | 0,22 % |
| Dikaliumphosphat | 0,6 % |
| Kalziumphosphat | 0,4 % |
| Insgesamt | 100 % |

### Milchrezept Version 4

| pro 100 ml | Milchersatzprodukt auf pflanzlicher Basis |
|---|---|
| Wasser | 87,88 % |
| Erbsenprotein | 5,5 % |
| Rapsöl | 2,90 % |
| Reissirup (oder andere) | 2,5 % |
| natürliches Aroma | 0,22 % |
| Dikaliumphosphat | 0,60 % |
| Kalziumphosphat | 0,40 % |
| Insgesamt | 100 % |

### Milchrezept Version 5

| pro 100 ml | Milchersatzprodukt auf pflanzlicher Basis |
|---|---|
| Wasser | 83,98 % |
| Erbsenprotein | 8,4 % |
| Rapsöl | 2,90 % |
| Reissirup (oder andere) | 3,5 % |
| natürliches Aroma | 0,22 % |
| Dikaliumphosphat | 0,60 % |
| Kalziumphosphat | 0,40 % |
| Insgesamt | 100 % |

### Milchrezept Version 6

| pro 100 ml | Milchersatzprodukt auf pflanzlicher Basis |
|---|---|
| Wasser | 78,98 % |
| Erbsenprotein | 10,2 % |
| Rapsöl | 2,90 % |
| Reissirup (oder andere) | 6,7 % |
| natürliches Aroma | 0,22 % |
| Dikaliumphosphat | 0,60 % |
| Kalziumphosphat | 0,40 % |
| Insgesamt | 100 % |

### Milchrezept Version 7

| pro 100 ml | Milchersatzprodukt auf pflanzlicher Basis |
|---|---|
| Wasser | 75,88 % |
| Erbsenprotein | 12% |
| Rapsöl | 2,90 % |
| Reissirup (oder andere) | 8% |
| natürliches Aroma | 0,22 % |
| Dikaliumphosphat | 0,60 % |
| Kalziumphosphat | 0,40 % |
| Insgesamt | 100 % |

### Nährwertprofil

| | |
|---|---|
| Energie | 223 kJ |
| | 53 kcal |
| Fett | 3,1g |
| davon einfach ungesättigte Fettsäuren | 1,9g |
| davon mehrfach ungesättigte Fettsäuren | 0,9g |
| davon gesättigte Fettsäuren | 0,2g |
| Kohlenhydrate davon Zucker | 2,8g |
| | 1,8g |
| Protein | 3,5g |
| Salz | 0,16g |
| Calcium | 163 mg (20%**) |
| Kalium | 272 mg (14%**) |
| Omega 3 Fettsäuren (α-Linolensäure,ALA) | 311 mg |
| ** der Nährstoffbezugswerte | |

Clean Label Joghurt auf Pflanzenbasis enthaltend:
a) 1-30 Gew.-% Stärke auf pflanzlicher Basis (Erbsenmehl); und
b) 2-20 Gew.-% Erbsenproteinkonzentrat/Isolat
c) vegane Starterkulturen

Verfahren zur Herstellung von Joghurt - 1 Liter:
1. Wasser hinzufügen (84 - 94 Gew.-%)
2. Fügen Sie die Stärke auf pflanzlicher Basis hinzu (1-30 Gew.-% Stärke auf pflanzlicher Basis (Erbsenmehl))
3. Erhitzen Sie Wasser & Stärkemischung für optimale Löslichkeit und Enzymaktivität (40-60 Grad Celsius)
4. Geben Sie Enzyme (Alpha-Amylase & Amylo-Glucosidase) in Wasser & Stärkelösung und lassen Sie die Hydrolyse über 2-12 Stunden ablaufen, bis die Stärke teilweise hydrolysiert ist.
5. Das Proteinkonzentrat/Isolat hinzufügen und mit dem (2-20 Gew.-% Erbsenproteinkonzentrat/Isolat) mischen
6. Weitere Zutaten (Öl) hinzufügen und mischen (1-5 Gew.-%)
7. Homogenisieren (standardisierte Handelsbedingungen)
8. Pasteurisierung (standardisierte Handelsbedingungen)
9. Kühlung (standardisierte kommerzielle Bedingungen)
10. Zugabe von Joghurt-Starterkulturen auf pflanzlicher Basis (Bifidobacterium species Lactobacillus acidophilus Lactobacillus delbrueckii subsp. bulgaricus Lactobacillus paracasei Streptococcus thermophilus)
11. Gärung (40-43 Grad Celsius für 6-10 Stunden, bis der pH-Wert 4,6 erreicht)
12. Kühlung
13. Rühren (Glätten)
14. Verpackung

### ZUTATEN

Wasser, Erbsenprotein (5,0 %), Rapsöl (2,9 %), vegane Kulturen

### Joghurt-Rezept Version 1

| pro 100 ml | Milchersatzprodukt auf pflanzlicher Basis |
|---|---|
| Wasser | 94,1 % |
| Erbsenprotein | 2% |
| Rapsöl | 2,90 % |
| Dikaliumphosphat | 0,60 % |
| Kalziumphosphat | 0,40 % |
| Vegane Kulturen | |
| Insgesamt | 100 % |

### Joghurt-Rezept Version 2

| pro 100 ml | Milchersatzprodukt auf pflanzlicher Basis |
|---|---|
| Wasser | 91,2 % |
| Erbsenprotein | 5 % |
| Rapsöl | 2,90 % |
| Dikaliumphosphat | 0,60 % |
| Kalziumphosphat | 0,40 % |
| Vegane Kulturen | |
| Insgesamt | 100 % |

### Joghurt-Rezept Version 3

| pro 100 ml | Milchersatzprodukt auf pflanzlicher Basis |
|---|---|
| Wasser | 84,1 % |
| Erbsenprotein | 12% |
| Rapsöl | 2,90 % |
| Dikaliumphosphat | 0,60 % |
| Kalziumphosphat | 0,40 % |
| Vegane Kulturen | |
| Insgesamt | 100 % |

## Patentansprüche

1. Erbsen enthaltendes pflanzliches Milchprodukt, ***dadurch gekennzeichnet, dass*** es hydrolysierten Sirup als hydrolysierten Reissirup oder hydrolysierten Erbsensirup oder hydrolysierten Hafersirup oder hydrolysierten Dinkelsirup oder hydrolysierten Ackerbohnensirup enthält.

2. Pflanzliches Milchprodukt nach Anspruch 1, ***dadurch gekennzeichnet, dass*** es 2 bis 12 Gew.-% Erbsenproteinisolat enthält.

3. Pflanzliches Milchprodukt nach einem der vorstehenden Ansprüche, ***dadurch gekennzeichnet, dass*** es 4 bis 10 Gew.-% Erbsenproteinisolat enthält.

4. Pflanzliches Milchprodukt nach einem der vorstehenden Ansprüche, ***dadurch gekennzeichnet, dass*** es 6 bis 8 Gew.-% Erbsenproteinisolat enthält.

5. Pflanzliches Milchprodukt nach Anspruch 1, ***dadurch gekennzeichnet, dass*** es 2 bis 12 Gew.-% Erbsenproteinkonzentrat enthält.

6. Pflanzliches Milchprodukt nach einem der vorstehenden Ansprüche, ***dadurch gekennzeichnet, dass*** es 4 bis 10 Gew.-% Erbsenproteinkonzentrat enthält.

7. Pflanzliches Milchprodukt nach einem der vorstehenden Ansprüche, ***dadurch gekennzeichnet, dass*** es 6 bis 8 Gew.-% Erbsenproteinkonzentrat enthält.

8. Pflanzliches Milchprodukt nach einem der vorstehenden Ansprüche, ***dadurch gekennzeichnet, dass*** es 1 bis 8 Gew.-% hydrolysierten Sirup enthält.

9. Pflanzliches Milchprodukt nach einem der vorstehenden Ansprüche, ***dadurch gekennzeichnet, dass*** es 3 bis 6 Gew.-% hydrolysierten Sirup enthält.

10. Pflanzliches Milcherzeugnis nach einem der vorstehenden Ansprüche, ***dadurch gekennzeichnet, dass*** es Reissirup enthält.

11. Pflanzliches Milcherzeugnis nach einem der vorhergehenden Ansprüche, ***dadurch gekennzeichnet, dass*** es Erbsensirup enthält.

12. Pflanzliches Milchprodukt nach einem der vorhergehenden Ansprüche, ***dadurch gekennzeichnet, dass*** es Hafersirup enthält.

13. Pflanzliches Milchprodukt nach einem der vorhergehenden Ansprüche, ***dadurch gekennzeichnet, dass*** es Dinkelsirup enthält.

14. Pflanzliches Milchprodukt nach einem der vorhergehenden Ansprüche, ***dadurch gekennzeichnet, dass*** es Ackerbohnensirup enthält.

15. Pflanzliches Milchprodukt nach einem der vorhergehenden Ansprüche, ***dadurch gekennzeichnet, dass*** es mit veganen Joghurt-Starterkulturen fermentiert ist.

16. Pflanzliches Milchprodukt nach einem der vorhergehenden Ansprüche, ***dadurch gekennzeichnet, dass*** es mit veganen Hefe-Starterkulturen fermentiert ist.

17. Pflanzliches Milchprodukt nach einem der vorhergehenden Ansprüche, ***dadurch gekennzeichnet, dass*** es enzymatisch mit Glycosid-Hydrolasen behandelt und anschließend mit veganen Joghurt-Starterkulturen fermentiert worden ist.

18. Verfahren zur Herstellung eines pflanzlichen Milchproduktes nach einem der vorhergehenden Ansprüche, ***dadurch gekennzeichnet, dass*** im Rahmen des Herstellungsprozesses zugesetzte Stärke enzymatisch hydrolysiert wird.

19. Verfahren zur Herstellung eines pflanzlichen Milchproduktes nach einem der vorangehenden Ansprüche, ***dadurch gekennzeichnet, dass*** es enzymatisch mit Phytase behandelt und anschließend mit veganen Joghurt-Starterkulturen fermentiert wird.

20. Verfahren zur Herstellung eines pflanzlichen Milchproduktes nach einem der vorhergehenden Ansprüche, ***dadurch gekennzeichnet, dass*** es enzymatisch mit Endo/Exo-Protease behandelt und dann mit veganen Joghurt-Starterkulturen fermentiert wird.
